# EUROPEAN PATENT SPECIFICATION

(11) **EP 2 378 451 B1**
(45) Date of publication and mention of the grant of the patent: **04.07.2018**
(21) Application number: 10160372.8
(22) Date of filing: 19.04.2010
(51) Int. Cl.: G06F 21/31, G06F 21/62, G06Q 30/06, G06Q 40/02, H04L 9/32

(54) **User authentication in a tag-based service**
Benutzerauthentifizierung in einem tagbasierten Dienst
Authentification d'utilisateur dans un service à base d'étiquettes

(43) Date of publication of application: 19.10.2011
(73) Proprietor: Vodafone Holding GmbH, 40213 Düsseldorf (DE)
(72) Inventor: Agibou Mountaga, Barry, 6217 GW Maastricht (NL)
(74) Representative: Jostarndt Patentanwalts-AG

(56) References cited:
- WO-A2-99/04326
- US-A1- 2005 125 301
- MENEZES, VANSTONE, OORSCHOT: "Handbook of Applied Cryptography", 1997, CRC PRESS LLC, USA, XP002655534, * page 22 - page 28 * * page 386 - page 390 * * page 551 - page 553 *
- Menezes ET AL: "Handbook of Applied Cryptography", 1996, CRC Press LLC, USA, XP055291748,

## Description

The invention relates to an authentication of a user in a tag-based service. More specifically, the invention is related to a method and to a system for accessing a personalized tag-based service.

A tag-based service is accessed by means of a so called tag, which is provided at certain location or attached to certain product, for example. The tag is read using an electronic device, which usually comprises a special application for processing information read from the tag. The application uses the information to execute a predetermined action. For instance, the application may invoke a web page specified in the read information, which is used for providing the service to the user, or the application may control the transmission of a message to an application server in order to trigger an action provided by the service.

Using a tag-based service, a service user may receive information on products or services, order products or services or may perform certain transactions, such as financial transactions, for example. For instance, tags for accessing such services may be provided in advertisements or on products. Further examples of tag-based services are location-related services where a tag is provided at certain location or control point and the action triggered upon reading the tag refers to the presence of the user of the reader device at this location or to a passing of the control point. For instance, such location-related tags may be used, for entrance and access control in buildings or other facilities and for executing payment transactions relating to entrance fees.

For providing tag-based services, tags are used which can be read when the electronic devices are brought in proximity to the tags. For this purpose, different tag technologies can be used. For instance, a tag may be a barcode which is optically read and analyzed by the reader device. An example of such a barcode is a QR code (QR: Quick Response), which is a two-dimensional barcode that is often used for mobile tagging. As an alternative, a tag may be read via a short range radio connection between the tag and the reader device. Examples of such tags are RFID tags (RFID: Radio Frequency Identification) and NFC tags (NFC: Near Field communication) which can be read by means of a reader device within a short range between a few centimeters and a few ten centimeters.

The reader device may be a mobile communication device, such as a cellular phone, a PDA (Personal Data Assistant) or the like. This allows using a device for reading tags, which a user usually already has at its disposal so that an extra device for reading tags is not required. Moreover, a mobile communication device is capable of connecting to an application server providing the service via a mobile communication network. Therefore, an increasing number of mobile communication devices is being equipped with interfaces, such as, for example, barcode readers or radio modules, for reading tags of the aforementioned types. Moreover, barcodes may be captured using digital cameras which are commonly included in modern mobile communication devices. In this case, the mobile communication device may be equipped with a software application interpreting the photograph of the barcode to determine the information encoded therein.

In order to identify the user accessing the service, the reader device may have identification information stored therein. This information may be transmitted from the reader device to the service provider together with the information read from the tag and the service provider may use this information to identify the user. Such a reader device is described in US 2005/0125301 A1, for example. In addition, document WO 99/04326 also discloses a reader device adapted to scan the bar code of a coupon, containing discount information on a product, as well as the address of the vendor. However, some tag-based services may require a secure, undoubtful determination of the identity of the service user that accesses the service. In particular, this is true for services incorporating financial transactions, such as, for example, services for ordering products or for paying entrance fees, where it is important that the contractual partner of the service provider can be determined without ambiguities. Such services are referred to as personalized service herein. In particular for such personalized services, a mere transmission of user information may not be sufficient to definitely determine that the service is accessed by the user, which is identified by the user information that have been used, when accessing the service.

Therefore, it is an object of the present invention to ensure a secure, undoubtful identification of a user that accesses a personalized tag-based service.

The object is achieved by a method according to claim 1 and by a system according to claim 14. Embodiments of the method and the system are given in the dependent claims.

According to a first aspect of the invention, a method for accessing a personalized tag-based service using a mobile communication device is suggested. The service is provided by an application server and the method comprises the following steps:
- capturing the tag using a reader unit of the mobile communication device and passing information included in the tag to an application,
- the application generating a service request based on the information and adding to the service request a security feature, the security feature being generated using information uniquely assigned to a user of the mobile communication device,
- transmitting the service request from the mobile communication device to a certification unit, and
- the certification unit verifying the security feature included in the service request and confirming the authenticity of the service request to the application server in response to a successful verification of the security feature, the application includes into the service request address information of the application server, the address information being included in the tag, the certification unit determining the application server using the address information included in the service request, wherein the certification unit is configured as a certification server, the certification server being spatially separated from the application server and being trusted by the application server, and the certification unit (being independent from the application server such that the security feature is independent from the requested service.

According to a second aspect, the invention suggests a system for accessing a personalized tag-based service comprising a mobile communication device and a certification unit. The tag-based service is provided by an application server. The mobile communication device includes a reader unit for capturing the tag and a means adapted to pass information included in the tag to an application. The application is adapted to generate a service request based on the information and to add to the service request a security feature, the security feature being generated using information uniquely assigned to a user of the mobile communication device, and the mobile communication device is adapted to send the service request. The certification unit is adapted to receive the service request, to verify the security feature included in the service request and to confirm the authenticity of the service request to the application server in response to a successful verification of the security feature, the application includes into the service request address information of the application server, the address information being included in the tag, the certification unit determining the application server using the address information included in the service request, wherein the certification unit is configured as a certification server, the certification server being spatially separated from the application server and being trusted by the application server, and the certification unit (being independent from the application server such that the security feature is independent from the requested service.

In particular, a personalized tag-based service is a tag based service in which the application server providing the service uses user information when executing the service. The user information may be information included in the group comprising the user's name, an electronic or postal address of the user and banking details of the user, such as, account details and credit card details. A service request is considered to be authentic, particular if it is confirmed that such user information belongs to the person that requested the service. The service may be accessed by means of a tag of any type and the information included in the tag may at least identify the application server

It is an advantage of the invention that the authenticity of the service request can be safely confirmed to the application server by a certification unit. Thereby, it is ensured that the service request originates from the user of the mobile communication device. For this purpose, a security feature is added to the service request and the security feature is verified by the certification unit confirming the authenticity to the application server. Preferably, the security feature is a cryptographic feature. It may be generated in the mobile communication device using secret information, such as a cryptographic key, which is only known to the user of the mobile communication device or available in the mobile communication device.

The certification unit may provide the confirmation of the authenticity of the service request to the application server explicitly or implicitly. An explicit confirmation may involve passing a certification of the authenticity from the certification unit to the application server. An implicit confirmation may be given when the certification unit executes certain actions only, when the service request has been authenticated.

In one embodiment of the method and the system, the certification unit receives the service request from the mobile communication device and forwards the service request to the application server in response to a successful verification of the security feature. In this embodiment, the conformation may be provided implicitly by forwarding the service request to the application server. However, the certification unit may also add an explicit certification of the authenticity of the service request to the forwarded service request. It is an advantage of this embodiment that the service request is transmitted to the application server via the certification unit. In particular, this can be done without the need to register the certification unit in the application unit, what may the case, for example, if the application server sends the received service request to the confirmation unit for authentication. When the service request is transmitted to the application server via the certification unit, the application does not need to know how to contact the certification unit.

The certification unit is configured as a certification server, the certification server being spatially separated from the application server and being trusted by the application server. This allows the certification unit to be operated by a trusted certification authority independent of the application server. For instance, the trusted certification authority may a mobile network operator of a mobile communication network to which the mobile communication device can be connected. Thus, the mobile
network operator can provide an authentication service for personalized tag-based services to its customers. Likewise, the certification server may be operated by a trusted third party.

One embodiment of the method and the system comprises that the application requests the user of the mobile communication device to enter a credential into the mobile communication device and generates the service request and/or the security feature only after having successfully verified the credential entered by the user. In particular, a credential is to be understood as secret information, which is known the user and which can be verified in the mobile communication device. A PIN (Personal Identification Number) is an example of a credential. The credential verified by the application may be the credential, which is used for unlocking other protected functions of the mobile communication device. As common in mobile communications the user may be requested to enter this credential upon activation of the mobile communication device. Likewise, the credential may be allocated exclusively to the application. The verification of the credential has the advantage that a service request cannot be generated and sent by an unauthorized person after the user has unlocked his mobile communication device. Thus, when user looses his mobile communication device, no third person can access a personalized tag-based service in the name of the user.

Tags may not only be provided for accessing personalized tag-based services, but also for other purposes, in particular for tag-based services, which are not personalized. Therefore, in one embodiment of the method and the system, the information is passed to the application for generating the service request in response to a determination that the information relates to a personalized tag-bases service. This ensures that security features are only generated when it is necessary, i.e. for personalized tag-based services.

In a further embodiment of the method and the system, the mobile communication device comprises a terminal and an identification module card inserted into the terminal, the application being executed in the identification module card. The identification module card provides an identification and/or authentication service for accessing a mobile communication network. Particularly, the identification module card may provide information for identifying and/or authentication the mobile communication device or its user to a mobile communication network. If the mobile communication network is configured according the GSM or UMTS standard (GSM: Global System for Mobile Communications; UMTS: Universal Mobile Telecommunications System), the identification module card particularly comprises a SIM or USIM application providing the secure identification and/or authentication service (SIM: Subscriber Identification Module; USIM: Universal Subscriber Identification Module). Advantageously, an identification module card provides a security architecture, which can be used for securely generating the security feature within the scope of the present invention.

Mobile terminals often include applications for processing information captured using the reader unit as standard equipment. Moreover, the processing of the captured information is not security related. Therefore, in one embodiment of the method and the system, the information included in the tag is determined using a further application, the further application being executed in the terminal for processing information read using the reader unit. This further application may be included in the standard equipment of the terminal and does not need to be protected against tampering in a special way. Advantageously, such an application can be used within the scope of the invention together with the secure application generating the security feature. In particular, this disburdens the application, which may be executed in the identification module card, from determining the information included in the tag.

A related embodiment of the method and the system comprises that the further application is launched by the application after the application has been started by the user of the mobile communication device. Advantageously, in this embodiment the generation of a service request from the tag is initiated by the application generating the security feature, which can be started by the user of the mobile communication device. This application includes a mechanism for launching the further application for determining the information included in the tag as an auxiliary application.

Furthermore, in one embodiment of the method and the system, the service request is transmitted to the certification unit encryptedly, the encryption being made by the application using an encryption key allocated to the certification unit. This ensures that the service request cannot be read by third parties during its transmission. Thus, user information included in the service request can be protected from authorized access during the transmission.

When the service request is transmitted from the mobile communication device to the certification unit directly, the mobile communication device may need to know communication details of the certification unit for sending the service request. This communication details may not be included in the tag. Therefore, in one embodiment of the method and the system, the communication details for transmitting the service request to the certification unit, which include an address of the certification unit and/or the key allocated to the certification unit, are pre-installed in the mobile communication device and/or in the identification module card. This is very convenient for the user of the mobile communication device who does not have to provide the communication details. Moreover, it allows the mobile network operator issuing the identification module card to predefine the certification unit to be used. Also, the mobile network operator may already register the user in the certification unit, when issuing the identification module card.

In one embodiment of the method and the system, the security feature includes a digital signature, the digital signature being generated using a cryptographic key allocated to the user of the mobile communication device. A digital signature is especially well suited for proofing the authenticity of the service request. A further embodiment of the method and the system provides that the tag includes a barcode, particularly a QR code, comprising the information. Such barcode tags are already widely used and many mobile communication devices already dispose of a reader unit and a further application for capturing and decoding barcodes, particularly QR codes.

Moreover, in one embodiment of the method and the system, the mobile communication device is connected to a mobile communication network and the service request is sent via the mobile communication network. This allows the user of the mobile communication device to access the service location-independent.

The aforementioned and other aspects of the invention will also be apparent from and elucidated with reference to the embodiments described hereinafter making reference to the drawings.

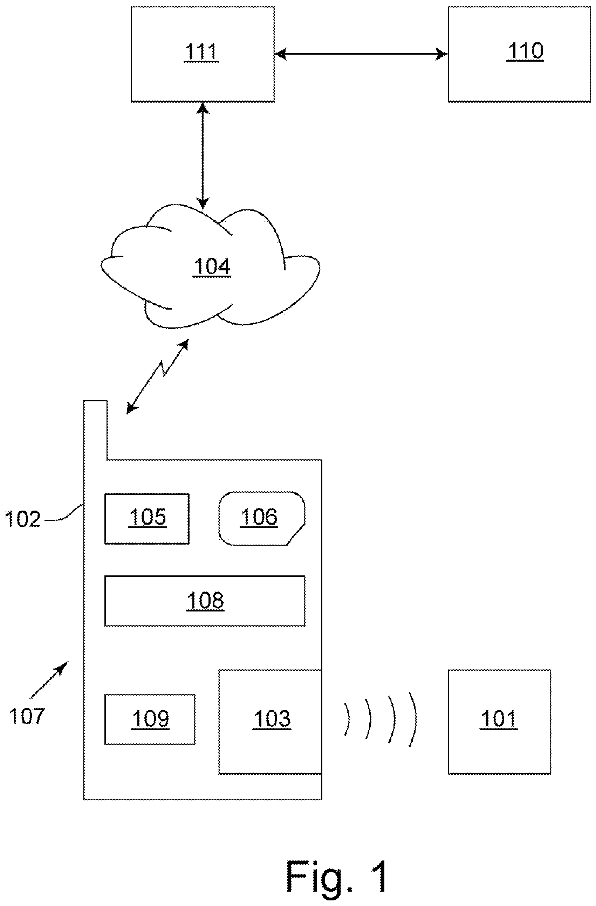

Reference will be made by way of example to the accompanying drawings in which
- Fig. 1: shows a schematic depiction of an arrangement for accessing a tag-based service including a system according to the invention.

For providing a personalized tag-based service, the system depicted in figure 1 comprises at least one tag 101. The tag 101 comprises information that can be read by means of a reader device 102, when the reader device 102 is brought in proximity to the tag 101. Preferably, the information can be read wirelessly from the tag 101. In different embodiments of the tag 101, the information may be read optically, acoustically or using radio waves. In one embodiment, the tag 101 may be configured as a barcode. The barcode may be a one-dimensional or two-dimensional barcode. In particular, the barcode may be QR code, which is a two-dimensional barcode that is in principle known to a person skilled in the art. As an alternative, the tag 101 may be a wireless electronic device which can be read using a radio connection between the tag 101 and a reader device 102. Examples of such wireless electronic devices are active and passive RFID tags or NFC tags. Likewise, the tag 101 may be an electronic device providing a wired interface for reading the information included in the tag 101.

The tag 101 may be used for providing a personalized tag-based service of any kind. For instance, the tag 101 may be provided in an advertisement in a newspaper, magazine, poster or the like or on a product and may be used for accessing information on products or for purchasing products. Likewise, the tag 101 may be provided at a predetermined location so that it can be determined that a reader device 102 reading a tag 101 is located at certain position or passes certain point. For instance, the tag 101 may be provided at entrances or exits of buildings or other facilities allowing determining that a user of a reader device 102 enters or leaves the building or facility when a tag 101 is read. This information may be used for carrying out an accounting transaction relating to an entrance fee, for example. However, the invention is not limited to these examples.

The information included in the tag 101 may identify the service and may allow accessing the service. In the system shown in figure 1, the service may be provided by an application server 110, which may be operated by the service provider. The application server 110 includes application logic for providing the service. The tag 101 may comprise information specifying the application server 110 to which a service request is to be sent. In particular, an address may be included allowing to send a service request to the application server. For identifying the service, the tag may include a unique identification code which can be used to identify the specific service in the application server 110. For instance, the identification code may specify a product, when the service includes ordering or purchasing a product. Moreover, the tag 101 may contain queries for information, which have to be added to a service request, such as, for example, data for identifying and authenticating the user accessing the service.

The reader device 102 belongs to a user of a tag-based service and is configured as a mobile communication device, which is used in a mobile communication network 104 to communicate with communication partners. In particular, the reader device 102 may be a cellular phone, a PDA or the like. Such devices may be equipped with suitable reader units 103 for reading tags 101 of one or more types. Using such mobile communication devices as reader devices 102 has the advantage that a user has such devices at his disposal in many situations and does not need to carry a further reader device 102 for accessing tag-based services.

For connecting the mobile communication device 102 wirelessly to the mobile communication network 104, the mobile communication device 102 comprises a radio module 105 which is configured according to the type of the mobile communication network 104. The mobile communication network 104 may be a GSM or UMTS network, for example. Likewise, a mobile communication network 104 may be configured according to a different mobile communication standard. The radio module 105 is connected to an identification module card 106, which provides applications and data for identifying and authenticating the reader device 102 in the mobile communication network 104. The application may be configured as a SIM application, if the mobile communication network 104 is a GSM network, and the application may be configured as a USIM application, if the mobile communication network 104 is a UMTS network.

As common in mobile communications, the identification module card 106 is configured as a smartcard, which is removably inserted into the mobile communication device 102 and which may be issued by the operator of the mobile communication network 104. It comprises a microcontroller that executes the aforementioned identification and/or authentication application and allows for executing further applications, which are installed in the identification module card 106. The microcontroller provides a secure environment for the execution of application and the storage of data. Particularly, this means that unauthorized access to data and processes is prevented due to the hardware design of the microcontroller and due to cryptographic mechanisms used for managing data in the microcontroller. Moreover, the microcontroller is integrated into a secure hardware environment provided by the smartcard, which is physically protected against manipulations, such as, power analysis, reverse engineering etc.

In the following, those parts of the mobile communication device 102, which are not part of the identification module card 106, are referred to as terminal 107. Thus, the mobile communication device 102 consists of the terminal 107 and the identification module card 106.

For interacting with the user, the mobile communication device 102 includes a user interface 108, which may comprise a display unit and an input unit, such as, for example a keyboard. The operation of the mobile communication 102 is controlled by a processor unit 109. The processor unit 109 interfaces with the components of the mobile communication 102 and allows for executing applications providing certain functionalities of the mobile communication 102.

The mobile communication device 102 is protected against unauthorized access to at least some of its functions. These functions, which may include an access to the mobile communication network 104, are accessible only after the user of the mobile communication device 102 has authenticated itself by entering a credential into the mobile communication device 102. The credential, which may be a PIN, may be verified in the identification module card 106 using a secure algorithm stored therein. Preferably, the verification of the credential is done upon activation of the mobile communication device 102 by the user. For this purpose, the user may be requested to enter the credential after the mobile communication device 102 has been turned on. Such a user authentication is common in mobile communications and, in principle, known to a person skilled in the art.

The tag 101 can be read by the mobile communication device 102 by means of the reader unit 103, which is configured according to the present type of tag 101. If the tag 101 is a barcode, the reader unit 103 may be configured as a special barcode reader. As an alternative, the barcode may be captured using a reader unit 103 which is configured as a digital camera integrated the mobile communication 102. Usually, such digital cameras form part of the standard equipment of modern mobile communication devices 102 and may be used for capturing barcodes in such devices. Digital photographs of the barcode may be passed to an application of the mobile communication device 102 which processes the photographs in order to decode the information encoded in the barcode. If the tag 101 is a wireless readable radio tag, the reader unit 103 may be a radio module configured to establish a radio connection to radio tags 101. If other tags 101 than radio tags or barcodes are provided in the system, the reader unit 103 may be configured in a different way suitable for reading information from such tags 101.

Using the mobile communication device 102 a user may access the tag-based service via the mobile communication network 104 to which the mobile communication device 102 is connected. In the architecture shown in figure 1, the application server 110 is connected to the mobile communication network 104 via a certification unit 111. The certification unit 111 is configured as a certification server 111 and authenticates service requests of the mobile communication device 102 as will be described hereinafter. In one embodiment, the certification server 111 and the application server 110 are connected to each other via a network connection and may be operated by different operates. For instance, the certification server 111 may be operated by the operator of the mobile communication network 104. This allows the operator of the mobile communication network 104 to provide authentication services for the subscribers of the mobile communication network 104 to providers of tag-based services. As alternative the certification server 111 may be operated by the service provider. In particular in this case, the certification unit 111 may also be integrated into the application server 110 so that the certification unit 111 and the application server 110 form an integrated unit. Likewise, the certification server 111 may be operated by a trusted third party.

When a user of the mobile communication device 102 wishes to access a tag-based service using a tag 101, which is present at his current location, an acquisition application for determining the information included in the tag 101 may be started. The acquisition application may be executed in the processor unit 109 of the terminal 107 of the mobile communication device 102. It may be configured as a MIDIet application that is executed using a Java platform of the mobile communication device 102. While the acquisition application determines the information included in the tag, the further processing of the information included in the tag 101 may be done by means of a processing application executed in the identification module card 106, as will be explained below. In this case, the user may start the processing application at first and the processing application may invoke the acquisition application of the terminal 107. As an alternative, the acquisition application may also be executed in the identification module card 106.

Although the acquisition application is used in connection with tag-based service, it does not need to be provided for this purpose only. Rather, the acquisition application may be a general application for determining information of any tags 101 captured using the reader unit 103. If the mobile communication device 102 includes a reader unit 103 of a specific type, a corresponding acquisition application may part of the standard equipment of the mobile communication device 102. Such an application, which is adapted to determine information included in tags 101 of a type readable using the existing reader unit 103, may be used in the process for accessing a tag-based service described herein as an auxiliary application to the processing application of the identification module card 106.

For accessing the processing application of the identification module card 106, the identification module card 106 may provide a corresponding entry in a menu presented by the terminal 107, particularly at the display unit of the user interface 108. The menu may be accessed by the user and the user may select the relevant menu entry for starting the processing application by means of the input unit of the user interface 108. The identification module card 106 may provide the menu at the terminal 107 using card application toolkit functionalities, particularly proactive commands allowing the identification module card 106 to access the terminal 107. A card application toolkit (CAT), which may be used for this purpose, is described in the ETSI document TS 102 223 (ETSI: European Telecommunications Standards Institute). If the identification module card 106 is configured according the GSM standard, the CAT may be the SIM application toolkit (SAT) particularly specified in the 3GPP document TS 51.014 (3GPP: 3rd Generation Partnership Project). If the identification module card 106 is a UICC comprising a USAT application according to the UMTS standard, the CAT may be the USIM application toolkit (USAT) particularly specified in the 3GPP document TS 31.111.

Upon or before starting the processing application, the user may read or capture the tag 101 by means of the reader unit 103. In this process, the user may position the mobile communication device 102 in such a way that the tag 101 can be read. Then, the reader unit 103 may take a photograph of the tag 101, if the tag 101 is barcode, or it may establish a communication connection to the tag 101, if the tag 101 is a wireless electronic device. The data captured from the tag 101 are then passed to the acquisition application. The reader unit 103 may be activated and/or controlled by the acquisition application. Likewise, it can be provided that the reader unit 103 is activated and/or operated under the control of the user and the captured data are stored in the mobile communication device 102 for processing by the acquisition application.

The acquisition application processes the received data and determines the information included in the data. As described before, the acquisition is adapted to the type of tag 101 and/or to the type of the reader unit 103, which determine the format of the data captured when reading the tag 101. If the tag 101 is a barcode, the acquisition application decodes the captured barcode to determine the information encoded therein. After having determined the information included in the tag 101, the acquisition application passes the information to the processing application of the identification module card 106.

In one embodiment, the acquisition application is additionally adapted to judge, whether the information relates to a personalized tag-based service or whether the tag 101 is used for other purposes. The relation to a personalized tag-based service may be determined using predetermined information included in the tag 101, which identify the tag 101 as being related to a personalized tag-based service. As described before, the information may include a query for user data, which may be used for accessing the tag-based service. This information may be realized by the acquisition application to determine that the tag 101 relates to a personalized tag-based service. If the acquisition application is capable of distinguishing tags 101 relating to personalized tag-based services from other tags 101, the acquisition application may only forward the information to the processing application, when the relation a personalized tag-based service is determined.

When receiving the information from the acquisition application, the processing application may process the information to generate a request document for accessing the tag-based service. In addition, before starting processing the information, the processing application may verify that the information related to a personalized tag-based service. This may be done in the way described before. However, if the acquisition application already made this verification, a repeated verification by the processing application may not be done. To the request document, the processing application may add user information, which may be securely stored in the identification module card 106. The user information may comprise information, which is used for executing the tag-based service and which the service provider requires. Examples of such information are the user's name, his electronic or postal address and information relating to payment, such as, bank account and credit card details of the user. The user information to be given may be specified in the information included in the tag 101. Furthermore, the processing application incorporates into the request document the address of the application server included in the tag and the information, which are necessary for the application server 110 to determine the desired service. This information is taken from the information included in the tag 101.

After having included the necessary information into the request document, the processing application adds a security feature to the request document. The security feature is an electronic signature that is configured in such a way that it allows verifying the authenticity of the request document. In one embodiment, the security feature is a digital signature, which is encrypted using a private key assigned to the user of the mobile communication device 102. The private key is securely stored in the identification module card 106 and is part of an asymmetric key pair. In addition to the private key, the asymmetric key pair comprises a public key, which can be used to decrypt information that has been encrypted using the private key. The information encrypted in the digital signature may include a hash value of the request document to be signed. This hash value may be used by its recipient to verify that the request document has not been modified.

In addition digitally signing the request document, the processing application may also encrypt the request document. Preferably, this is done using a public key of the certification server 111, which may be stored in the identification module card 106. The public key of the certification server 111 is a part of an asymmetric key pair assigned to the certification server 111. The key pair also includes a private key of the certification server 111, which is securely stored in the certification server 111 and used for decrypting information that has been encrypted using the public key. The public key of the certification server 111 may be installed in the identification module card together with the processing application. This may be done by the operator of the mobile communication network 104 before issuing the identification module card to the user of the mobile communication device 102. Alternatively, the public key of the certification server 111 is installed in the identification module card 106 by the user after it has been issued.

The generation and/or signing of the request document by the processing application may require the verification of a credential of the user of the mobile communication device 102. For this purpose, the processing application may request the user of the mobile communication device 102 to enter the credential before generating the request document or before adding the digital signature to the request document. The request may be presented at the display unit of the user interface 108 of the terminal 107 and the user may enter the credential using the input unit of the user interface 108. The user query may again be controlled by means of suitable CAT commands. After having received the user input, the entered credential is verified by a secure mechanism provided in the identification module card 106. This may be done by comparing the entered credential with a credential securely stored in the identification module card 106. The request document and/or the electronic signature is generated only, if the credential has been verified successfully. Otherwise, the processing application does not generate the request document and/or the electronic signature. The credential may again be configured as a PIN. In one embodiment, the credential is a special credential for unlocking the processing application. However, in a further embodiment, the credential corresponds to the credential, which is used to unlock protected functions of the mobile communication device 102 as described above. Thus, only one credential has to be stored in the identification module card 106 and the user does have to memorize only one credential.

The authentication of the user described before ensures that the mobile communication device 102 is not used by unauthorized third persons for accessing a tag-based service, after the initial user authentication has been done successfully at the time of activating the mobile communication device 102. Thus, it is not possible that a third person uses the mobile communication device 102 for accessing a tag-based service after the authorized user has authenticated itself once.

After the processing application has generated the request document, added the digital signature and, if applicable, encrypted the request document, the processing application controls the mobile communication device 102 to transmit the request document to the certification server 111 via the mobile communication network 104. Again, this may be done by means of suitable CAT commands. For transmitting the request document, any bearer service provided by the mobile communication network 104 may be used. Examples of such bearer services are message services, such as, for example, SMS (Short Message Service) and MMS (Multimedia Messaging Service), and bearer service allowing for a packet switched communication connection via which the request document may be transmitted. The address information, which is used for transmitting the request document to the certification server 111, may be stored in the processing application of identification module card 106. As the public key of the certification server 111, the address information may be pre-installed in the identification module card 106 or it may be stored therein after issuance.

Upon receipt of the request document, the certification server 111 decrypts the request document using its private key, if the request document has been encrypted by the processing application of the identification module card 106. Furthermore, the certification server 111 verifies the security feature attached to the request document. If the security feature is a digital signature, the digital signature may be verified using a digital certificate of the user of the mobile communication device 102, including the verified public key of the user. This certificate is stored in the certification server 111 during a registration process, which is carried out in advance of an access of the tag-based service. By decrypting the digital signature using the verified public key of the user, the certification server 111, verifies that the request document originates from the user to which the digital certificate is assigned. In addition, the certification server 111 may also verify the integrity of the request document by comparing the hash value included in the digital signature with a locally generated hash value of the request document. If both hash values match, it can be determined that the request document has not been modified during the transmission from the identification module card 106 to the certification server 111.

If the certification server 111 has successfully verified the authenticity of the request document and, if applicable, its integrity, the certification server 111 determines the application server 110 providing the requested service and forwards the request document or information included in the request document to the determined application server 110 via a secure connection between the certification server 111 and the application server 110. The digital signature does not necessarily have to transmit to the application server 110 after it has been verified in the certification server 112. The connection between the certification server 111 and the application server 110 can be secured in any way known to a person skilled in the art. The application server 110 is preferably determined using the corresponding information included in the request document, particularly the included address information. After the application server 110 has received the request document or the information included therein from the certification server 111, it initiates the execution of the requested server for the user of the mobile communication device 102. As described before, the application server 110 may initiate a delivery and/or a payment for certain good or service.

In alternative embodiment, the application server 110 is connected directly to the mobile communication network 104 and is again also connected to the certification server 111 via another connection. In this architecture, the request document may be transmitted from the mobile communication device 102 directly to the application server 110, which is identified by the processing application controlling the transmission using the information included in the tag 101. Upon receipt of the request document, the application server 110 may forward the request document to the certification server 111 for verifying the authenticity and, if applicable, the integrity of the request document in the manner described before. Then, the certification server 111 notifies the application server 110 of the result of the verification process and the application may initiate the service only, if the certification server 111 signals a successful result. If the request document is transmitted directly to the application server 110 and is encrypted, it is preferably encrypted using the public key of the application server 110 allowing the application server 110 to decrypt the request document using its private key forming an asymmetric key pair together with the public key.

The embodiment in which the request document is transmitted directly to the application server 110 also ensures a secure, undoubtful identification of the user of the mobile communication device 102 in the application server 110. However, compared to this embodiment, the embodiment in which the request document is transmitted to the application server 110 via the certification server 111 has the advantage that the application server 110 does not have to initiate a communication with the certification server 111 on its own initiative, which requires a foregoing identification of certification server 111 in the application server 110. Moreover, the mobile communication device 102 does only communicate with the certification server 111 so that the same communication details, such as, for example, the public key of the communication partner, are used independent of the specific service and application server 110. Thus, these details can be stored fixedly in the identification module card 106 and does not have to be provided to the identification module card 106 for each individual service.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A method for accessing a personalized tag-based service using a mobile communication device (102), the service being provided by an application server (110), the method comprising the steps of:
- capturing the tag (101) using a reader unit (103) of the mobile communication device (102) and passing information included in the tag (101) to an application,
- the application generating a service request based on the information and adding to the service request a security feature, the security feature being generated using information uniquely assigned to a user of the mobile communication device (102),
- transmitting the service request from the mobile communication device (102) to a certification unit (111), and
- the certification unit (111) verifying the security feature included in the service request and confirming the authenticity of the service request to the application server (110) in response to a successful verification of the security feature
**characterized in that** the application includes into the service request address information of the application server (110), the address information being included in the tag, the certification unit (111) determining the application server (110) using the address information included in the service request, wherein the certification unit (111) is configured as a certification server, the certification server being spatially separated from the application server (110) and being trusted by the application server (110), and the certification unit (111) being independent from the application server (110) such that the security feature is independent from the requested service.

2. The method according to claim 1, wherein the certification unit (111) receives the service request from the mobile communication device (102) and forwards the service request to the application server (110) in response to a successful verification of the security feature.

3. The method according to one of the preceding claims, wherein the application requests the user of the mobile communication device (102) to enter a credential into the mobile communication device (102) and generates the service request and/or the security feature only after having successfully verified the credential entered by the user.

4. The method according to one of the preceding claims, wherein the information is passed to the application for generating the service request in response to a determination that the information relates to a personalized tag-bases service.

5. The method according to one of the preceding claims, wherein the mobile communication device (102) comprises a terminal (107) and an identification module card (106) inserted into the terminal (107), the application being executed in the identification module card (106).

6. The method according to one of the preceding claims, wherein the information included in the tag (101) is determined using a further application, the further application being executed in the terminal (107) for processing information read using the reader unit (103).

7. The method according to claim 6, wherein the further application is launched by the application after the application has been started by the user of the mobile communication device (102).

8. The method according to one of the preceding claims, wherein the service request is transmitted to the certification unit (111) encryptedly, the encryption being made by the application using an encryption key allocated to the certification unit (111).

9. The method according to one of the preceding claims, wherein communication details for transmitting the service request to the certification unit (111), which include an address of the certification unit (111) and/or the key allocated to the certification unit (111), are pre-installed in the mobile communication device (102) and/or in the identification module card (106).

10. The method according to one of the preceding claims, wherein the security feature include a digital signature, the digital signature being generated using a cryptographic key allocated to the user of the mobile communication device (102).

11. The method according to one of the preceding claims, wherein the tag (101) includes a barcode, particularly a QR code, comprising the information.

12. The method according to one of the preceding claims, wherein the mobile communication device (102) is connected to a mobile communication network (104) and the service request is sent via the mobile communication network (104).

13. A system for accessing a personalized tag-based service comprising a mobile communication device (102) and a certification unit (111), the tag-based service being provided by an application server (110),
the mobile communication device (102) including a reader unit (103) for capturing the tag (101) and a means adapted to pass information included in the tag (101) to an application,
the application being adapted to generate a service request based on the information and to add to the service request a security feature, the security feature being generated using information uniquely assigned to a user of the mobile communication device (102), and
the mobile communication device (102) being adapted to send the service request,
the certification unit (111) being adapted to receive the service request, to verify the security feature included in the service request and to confirm the authenticity of the service request to the application server (110) in response to a successful verification of the security feature
**characterized in that** the application is configured to include into the service request address information of the application server (110), the address information being included in the tag, and the certification unit (111) is configured to determine the application server (110) using the address information included in the service request, wherein the certification unit (111) is configured as a certification server, the certification server being spatially separated from the application server (110) and being trusted by the application server (110), and the certification unit (111) being independent from the application server (110) such that the security feature is independent from the requested service.

14. The system according to claim 13, wherein the mobile communication device (102) comprises a terminal (107) and an identification module card (106) inserted into the mobile terminal (107), the application being executable in the identification module card (106).

## Patentansprüche

1. Verfahren zum Zugriff auf einen personalisierten, tag-basierten Dienst mittels einer Mobilkommunikationsvorrichtung (102), wobei der Dienst durch einen Anwendungsserver (110) bereitgestellt wird, und das Verfahren die Schritte umfasst:
- Erfassen des Tags (101) mittels einer Leseeinheit (103) der Mobilkommunikationsvorrichtung (102) und Weiterleiten von Information, die in dem Tag (101) enthalten sind, an eine Anwendung,
- Erzeugen einer Dienstanfrage durch die Anwendung basierend auf den Informationen und Hinzufügen eines Sicherheitsmerkmals zu der Dienstanfrage, wobei das Sicherheitsmerkmal mittels Informationen erzeugt wird, die einem Nutzer der Mobilkommunikationsvorrichtung (102) eindeutig zugeordnet sind,
- Übertragen der Dienstanfrage von der Mobilkommunikationsvorrichtung (102) an eine Zertifizierungseinheit (111), und
- Überprüfen des Sicherheitsmerkmals, das in der Dienstanfrage enthalten ist, durch die Zertifizierungseinheit (111) und Bestätigen der Echtheit der Dienstanfrage an den Anwendungsserver (110) als Reaktion auf eine erfolgreiche Überprüfung des Sicherheitsmerkmals,
**dadurch gekennzeichnet, dass** die Anwendung Adressinformationen des Anwendungsservers (110) in die Dienstanfrage einbindet, wobei die Adressinformationen in dem Tag enthalten sind, wobei die Zertifizierungseinheit (111) den Anwendungsserver (110) mittels der in der Dienstanfrage enthaltenen Adressinformationen bestimmt, wobei die Zertifizierungseinheit (111) als Zertifizierungsserver eingerichtet ist, wobei der Zertifizierungsserver räumlich von dem Anwendungsserver (110) getrennt ist und ihm von dem Anwendungsserver (110) vertraut wird, und wobei die Zertifizierungseinheit (111) unabhängig von dem Anwendungsserver (110) ist, so dass das Sicherheitsmerkmal unabhängig von dem angefragten Dienst ist.

2. Verfahren nach Anspruch 1, wobei die Zertifizierungseinheit (111) die Dienstanfrage von der Mobilkommunikationsvorrichtung (102) empfängt und die Dienstanfrage als Reaktion auf eine erfolgreiche Überprüfung des Sicherheitsmerkmals an den Anwendungsserver (110) weiterleitet.

3. Verfahren nach einem der vorstehenden Ansprüche, wobei die Anwendung den Nutzer der Mobilkommunikationsvorrichtung (102) auffordert, einen Berechtigungsnachweis in die Mobilkommunikationsvorrichtung (102) einzugeben und die Dienstanfrage und/oder das Sicherheitsmerkmal erst nach erfolgreicher Überprüfung des durch den Nutzer eingegebenen Berechtigungsnachweises erzeugt.

4. Verfahren nach einem der vorstehenden Ansprüche, wobei die Information an die Anwendung zur Erzeugung der Dienstanfrage als Reaktion auf eine Feststellung weitergereicht wird, dass die Information einen personalisierten, tag-basierten Dienst betrifft.

5. Verfahren nach einem der vorstehenden Ansprüche, wobei die Mobilkommunikationsvorrichtung (102) ein Endgerät (107) und eine in das Endgerät (107) eingesteckte Identifikationsmodulkarte (106) aufweist, wobei die Anwendung in der Identifikationsmodulkarte (106) ausgeführt wird.

6. Verfahren nach einem der vorstehenden Ansprüche, wobei die in dem Tag (101) enthaltene Information mittels einer weiteren Anwendung bestimmt wird, wobei die weitere Anwendung in dem Endgerät (107) zur Verarbeitung von mittels der Leseeinheit (103) ausgelesenen Informationen ausgeführt wird.

7. Verfahren nach Anspruch 6, wobei die weitere Anwendung durch die Anwendung gestartet wird, nachdem die Anwendung durch den Nutzer der Mobilkommunikationsvorrichtung (102) gestartet wurde.

8. Verfahren nach einem der vorstehenden Ansprüche, wobei die Dienstanfrage verschlüsselt an die Zertifizierungseinheit (111) übertragen wird, wobei die Verschlüsselung durch die Anwendung mittels eines Verschlüsselungsschlüssels erfolgt, der der Zertifizierungseinheit (111) zugewiesen ist.

9. Verfahren nach einem der vorstehenden Ansprüche, wobei Einzelheiten der Kommunikation zur Übertragung der Dienstanfrage an die Zertifizierungseinheit (111), die eine Adresse der Zertifizierungseinheit (111) und/oder den der Zertifizierungseinheit (111) zugewiesenen Schlüssel umfassen, in der Mobilkommunikationsvorrichtung (102) und/oder der Identifikationsmodulkarte (106) vorinstalliert sind.

10. Verfahren nach einem der vorstehenden Ansprüche, wobei das Sicherheitsmerkmal eine digitale Signatur enthält, wobei die digitale Signatur mittels eines Verschlüsselungsschlüssels erzeugt wird, der dem Nutzer der Mobilkommunikationsvorrichtung (102) zugeordnet ist.

11. Verfahren nach einem der vorstehenden Ansprüche, wobei der Tag (101) einen Barcode, insbesondere einen QR-Code, umfasst, der die Informationen aufweist.

12. Verfahren nach einem der vorstehenden Ansprüche, wobei die Mobilkommunikationsvorrichtung (102) mit einem Mobilkommunikationsnetz (104) verbunden ist und die Dienstanfrage über das Mobilkommunikationsnetz (104) übertragen wird.

13. System zum Zugriff auf einen personalisierten, Tag-basierten Dienst aufweisend eine Mobilkommunikationsvorrichtung (102) und eine Zertifizierungseinheit (111), wobei der Tag-basierte Dienst durch einen Anwendungsserver (110) bereitgestellt wird,
wobei die Mobilkommunikationsvorrichtung (102) eine Leseeinheit (103) zur Erfassung des Tags (101) und ein Mittel umfasst, das eingerichtet ist, die in dem Tag (101) enthaltenen Informationen an eine Anwendung weiterzureichen,
wobei die Anwendung eingerichtet ist, eine Dienstanfrage basierend auf der Information zu erzeugen und der Dienstanfrage ein Sicherheitsmerkmal hinzuzufügen, wobei das Sicherheitsmerkmal mittels Informationen erzeugt wird, die einem Nutzer der Mobilkommunikationsvorrichtung (102) eindeutig zugeordnet sind, und
wobei die Mobilkommunikationsvorrichtung (102) eingerichtet ist, die Dienstanfrage zu senden,
wobei die Zertifizierungseinheit (111) eingerichtet ist, die Dienstanfrage zu empfangen, das in der Dienstanfrage enthaltene Sicherheitsmerkmal zu überprüfen, und dem Anwendungsserver (110) die Echtheit der Dienstanfrage als Reaktion auf eine erfolgreiche Überprüfung des Sicherheitsmerkmals zu bestätigen,
**dadurch gekennzeichnet, dass** die Anwendung eingerichtet ist, Adressinformationen des Anwendungsservers (110) in die Dienstanfrage einzubinden, wobei die Adressinformationen in dem Tag enthalten sind, und die Zertifizierungseinheit (111) eingerichtet ist, den Anwendungsserver (110) mittels der in der Dienstanfrage enthaltenen Adressinformationen zu bestimmen, wobei die Zertifizierungseinheit (111) als Zertifizierungsserver eingerichtet ist, wobei der Zertifizierungsserver räumlich von dem Anwendungsserver (110) getrennt ist und ihm von dem Anwendungsserver (110) vertraut wird, und wobei die Zertifizierungseinheit (111) unabhängig von dem Anwendungsserver (110) ist, so dass das Sicherheitsmerkmal unabhängig von dem angefragten Dienst ist.

14. System nach Anspruch 13, wobei die Mobilkommunikationsvorrichtung (102) ein Endgerät (107) und eine in das Endgerät (107) eingesteckte Identifikationsmodulkarte (106) aufweist, wobei die Anwendung in der Identifikationsmodulkarte (106) ausführbar ist.

## Revendications

1. Procédé destiné à accéder à un service à base de balise personnalisé à l'aide d'un dispositif de télécommunications mobiles (102), le service étant fourni par un serveur d'application (110), le procédé comprenant les étapes consistant à :
- capturer la balise (101) à l'aide d'une unité formant lecteur (103) du dispositif de télécommunications mobiles (102), et à transférer les informations incluses dans la balise (101) à une application ;
- l'application générant une demande de service sur la base des informations et ajoutant à la demande de service une fonctionnalité de sécurité, la fonctionnalité de sécurité étant générée à l'aide d'informations attribuées uniquement à un utilisateur du dispositif de télécommunications mobiles (102) ;
- transmettre la demande de service émanant du dispositif de télécommunications mobiles (102) à une unité de certification (111), et
- l'unité de certification (111) vérifiant la fonctionnalité de sécurité incluse dans la demande de service et confirmant l'authenticité de la demande de service au serveur d'application (110) en réponse à une vérification réussie de la fonctionnalité de sécurité,
**caractérisé en ce que** l'application inclut dans la demande de service des informations d'adresse du serveur d'application (110), les informations d'adresse étant incluses dans la balise, l'unité de certification (111) déterminant l'application de serveur (110) à l'aide des informations d'adresse incluses dans la demande de service, dans lequel l'unité de certification (111) est configurée sous la forme d'un serveur de certification, le serveur de certification étant séparé sur le plan spatial du serveur d'application (110) et étant approuvé par le serveur d'application (110), et l'unité de certification (111) étant indépendante du serveur d'application (110), de telle sorte que la fonctionnalité de sécurité est indépendante du service demandé.

2. Procédé selon la revendication 1, dans lequel l'unité de certification (111) reçoit la demande de service du dispositif de télécommunications mobiles (102) et réachemine la demande de service vers le serveur d'application (110) en réponse à une vérification réussie de la fonctionnalité de sécurité.

3. Procédé selon l'une quelconque des revendications précédentes, dans lequel l'application demande à l'utilisateur du dispositif de télécommunications mobiles (102) de saisir des informations d'identification dans le dispositif de télécommunications mobiles (102), et génère la demande de service et/ou la fonctionnalité de sécurité uniquement après avoir vérifié avec succès les informations d'identification saisies par l'utilisateur.

4. Procédé selon l'une quelconque des revendications précédentes, dans lequel les informations sont transférées à l'application pour générer la demande de service en réponse à une détermination selon laquelle les informations sont liées à un service à base de balise personnalisé.

5. Procédé selon l'une quelconque des revendications précédentes, dans lequel le dispositif de télécommunications mobiles (102) comprend un terminal (107) et une carte de module d'identification (106) introduite dans le terminal (107), l'application étant exécutée dans la carte de module d'identification (106).

6. Procédé selon l'une quelconque des revendications précédentes, dans lequel les informations incluses dans la balise (101) sont déterminées à l'aide d'une application supplémentaire, l'application supplémentaire étant exécutée dans le terminal (107) pour traiter des informations lues à l'aide de l'unité formant lecteur (103).

7. Procédé selon la revendication 6, dans lequel l'application supplémentaire est lancée par l'application après démarrage de l'application par l'utilisateur du dispositif de télécommunications mobiles (102).

8. Procédé selon l'une quelconque des revendications précédentes, dans lequel la demande de service est transmise à l'unité de certification (111) sous forme chiffrée, le chiffrement étant réalisé par l'application à l'aide d'une clé de chiffrement allouée à l'unité de certification (111).

9. Procédé selon l'une quelconque des revendications précédentes, dans lequel des détails de communication pour transmettre la demande de service à l'unité de certification (111), lesquels incluent une adresse de l'unité de certification et/ou la clé allouée à l'unité de certification (111), sont pré-installés dans le dispositif de télécommunications mobiles (102) et/ou dans la carte de module d'identification (106).

10. Procédé selon l'une quelconque des revendications précédentes, dans lequel la fonctionnalité de sécurité inclut une signature numérique, la signature numérique étant générée à l'aide d'une clé cryptographique allouée à l'utilisateur du dispositif de télécommunications mobiles (102).

11. Procédé selon l'une quelconque des revendications précédentes, dans lequel la balise (101) inclut un code barre, en particulier un code QR, comprenant les informations.

12. Procédé selon l'une quelconque des revendications précédentes, dans lequel le dispositif de télécommunications mobiles (102) est connecté à un réseau de télécommunications mobiles (104), et la demande de service es envoyée via le réseau de télécommunications mobiles (104).

13. Système destiné à accéder à un service à base de balise personnalisé, comprenant un dispositif de télécommunications mobiles (102) et une unité de certification (111), le service à base de balise personnalisé étant fourni par un serveur d'application (110),
le dispositif de télécommunications mobiles (102) incluant une unité formant lecteur (103) pour capturer la balise (101) et un moyen apte à transférer les informations incluses dans la balise (101) à une application ; l'application étant apte à générer une demande de service sur la base des informations et à ajouter à la demande de service une fonctionnalité de sécurité, la fonctionnalité de sécurité étant générée à l'aide d'informations attribuées uniquement à un utilisateur du dispositif de télécommunications mobiles (102), et
le dispositif de télécommunications mobiles (102) étant apte à envoyer la demande de service,
l'unité de certification (111) étant apte à recevoir la demande de service, à vérifier la fonctionnalité de sécurité incluse dans la demande de service et à confirmer l'authenticité de la demande de service au serveur d'application (110) en réponse à une vérification réussie de la fonctionnalité de sécurité,
**caractérisé en ce que** l'application est configurée pour inclure dans la demande de service des informations d'adresse du serveur d'application (110), les informations d'adresse étant incluses dans la balise, et l'unité de certification (111) est configurée pour déterminer l'application de serveur (110) à l'aide des informations d'adresse incluses dans la demande de service, dans lequel l'unité de certification (111) est configurée sous la forme d'un serveur de certification, le serveur de certification étant séparé sur le plan spatial du serveur d'application (110) et étant approuvé par le serveur d'application (110), et l'unité de certification (111) étant indépendante du serveur d'application (110), de telle sorte que la fonctionnalité de sécurité est indépendante du service demandé.

14. Système selon la revendication 13, dans lequel le dispositif de télécommunications mobiles (102) comprend un terminal (107) et une carte de module d'identification (106) introduite dans le terminal mobile (107), l'application pouvant être exécutée dans la carte de module d'identification (106).
